# EUROPÄISCHE PATENTANMELDUNG

(11) **EP 3 666 343 A1**
(43) Veröffentlichungstag der Anmeldung: **17.06.2020**
(21) Anmeldenummer: 18211205.2
(22) Anmeldetag: 10.12.2018
(51) Int. Cl.: A62C 2/06, A62C 2/24, A62C 3/16, F16L 5/04, F16L 55/10

(54) **BRANDSCHUTZELEMENT**

(71) Anmelder: Hilti Aktiengesellschaft, 9494 Schaan (LI)
(72) Erfinder: Ahlers, Andreas, 87679 Westendorf (DE); Simon, Sebastian, 86807 Buchloe Lindenberg (DE)
(74) Vertreter: Hilti Aktiengesellschaft Corporate Intellectual Property

(57) **Zusammenfassung**

Ein Brandschutzelement (10) zum Abdichten eines eine Öffnung einer Wand (22) oder Decke (26) durchsetzenden brennbaren Körpers (24) im Brandfall umfasst eine Brandschutzeinlage (18) und eine auf die Brandschutzeinlage (18) wirkende Bewegungseinrichtung (16), wobei die Brandschutzeinlage (18) in Längsrichtung der Öffnung beweglich angeordnet ist. Ferner wird ein Verfahren zum Anbringen des Brandschutzelements (18) in der Wand (22) oder Decke (26) beschrieben.

## Beschreibung

Die Erfindung betrifft ein Brandschutzelement zum Abdichten eines eine Öffnung in einer Wand oder Decke durchsetzenden brennbaren Körpers im Brandfall.

Um eine Ausbreitung von Feuer oder Rauch in Gebäuden zu verhindern, müssen Öffnungen in Decken oder Wänden, in denen beispielsweise Rohre oder Kabel geführt werden, im Brandfall verschlossen werden können. Zu diesem Zweck werden verschiedene Brandschutzlösungen eingesetzt, zum Beispiel Bandagen oder Bänder, die in die Wand oder als Manschetten vor der Wand montiert werden.

Dabei werden verschiedene Brandschutzmittel, beispielsweise in Form von Einlagen verwendet, die beispielsweise an einem Gehäuse befestigt werden. Insbesondere intumeszierende Materialien eignen sich für die Einlagen. Im Brandfall schäumt das intumeszierende Material durch Wärmeeinwirkung auf und verschließt die Öffnung, wodurch die Ausbreitung von Rauch oder Feuer verhindert oder zumindest verzögert wird.

Brandschutzmanschetten haben den Vorteil, dass sie außerhalb der Wand montiert werden und so im Brandfall schneller erhitzt werden können, da das Brandschutzmittel nicht passiv durch die umgebende Wand gekühlt wird.

Da die Manschetten jedoch an der Außenseite der Wand angebracht werden müssen, kann der Brandschutz erst angebracht werden, nachdem die Wand oder Decke beispielsweise aus Beton bereits gegossen wurde und Rohre oder Kabelführungen verlegt worden sind. Dadurch sind zusätzliche Arbeitsschritte notwendig. Gleichzeitig besteht noch kein Brandschutz, bis die Manschetten montiert sind.

Aus der WO 2016 202 681 A1 ist ein Brandschutzband bekannt, das ein Intumeszenzmaterial auf einem Träger umfasst. Der Träger ist aus einem Material, welches sich selbstständig zu einer Spirale aufrollt, wenn keine gegenläufige Kraft auf das Material einwirkt. Das Brandschutzband wird beispielsweise um ein Rohr in einer Wand geklemmt und so unter Vorspannung gehalten. Im Brandfall schmilzt das Rohr weg, wodurch sich das Brandschutzband einrollt und auf diese Weise das Intumeszenzmaterial ins Innere der Öffnung innerhalb der Wand einträgt.

Die WO 2004 015 319 A1 zeigt eine Manschette, in der in einem ringförmigen Gehäuse eine gespannte Schraubenfeder und ein hitzebeständiges Gewebe vorgesehen ist. Im Brandfall drückt die Schraubenfeder das schmelzende Rohr zusammen und zieht dabei das hitzebeständige Gewebe in das Innere der Rohröffnung mit. Zusätzlich ist ein Intumeszenzmaterial vorgesehen, welches zwischen einer Wand und der Schraubenfeder um das Rohr herum angeordnet ist und für einen weiteren Verschluss der Öffnung sorgt.

In der DE 10 2004 014 347 B4 werden lamellenförmige Sperrelemente aus Bimetall eingesetzt, welche aufgerollt um das Rohr angeordnet sind und sich im Brandfall entrollen, um auf diese Weise die Öffnung irisartig zu verschließen.

Aus der US 2017 009 470 A1 sind Rohrdurchführungen bekannt, die flexibel an die Dicke einer Wand oder Decke angepasst und bereits während des Gießens der Wand oder Decke montiert werden können. Jedoch weisen diese Rohrdurchführungen keine Brandschutzfunktion auf.

Aufgabe der Erfindung ist es, eine Brandschutzlösung bereitzustellen, welche bereits während der Herstellung einer Wand oder Decke angebracht werden kann.

Die Aufgabe wird erfindungsgemäß gelöst durch ein Brandschutzelement zum Abdichten eines eine Öffnung in einer Wand oder Decke durchsetzenden brennbaren Körpers im Brandfall, mit einer Brandschutzeinlage und einer auf die Brandschutzeinlage wirkenden Bewegungseinrichtung, wobei die Brandschutzeinlage in Längsrichtung der Öffnung beweglich angeordnet ist.

Durch die bewegliche Anordnung der Brandschutzeinlage wird ermöglicht, dass die Brandschutzeinlage bereits vor dem Gießen der Wand oder Decke angebracht und die Position der Brandschutzeinlage in einem späteren Arbeitsschritt noch verändert werden kann.

Somit kann das Brandschutzelement beispielsweise als Cast-In bereits auf der Schalung zum Gießen einer Betonwand oder -decke aufgebracht werden. Direkt nach dem Gießen der Wand oder Decke ist das Brandschutzelement bereits funktionstüchtig in der Wand oder Decke angeordnet, sodass so früh wie möglich ein Brandschutz gewährleistet ist.

In einer Ausgangsposition des Brandschutzelements befindet sich die Brandschutzeinlage entsprechend innerhalb der Wand und Decke und wird anschließend mittels der Bewegungseinrichtung in eine Endposition überführt, in der sich die Brandschutzeinlage zumindest teilweise außerhalb der Wand oder Decke befindet. Die Brandschutzeinlage kann mit der Bewegungseinrichtung gekoppelt sein, so dass die Brandschutzeinlage zusammen mit der Bewegungseinrichtung von der Ausgangsposition in die Endposition bewegt werden kann.

Das Brandschutzelement kann ein Hüllrohr umfassen, in dem die Bewegungseinrichtung und die Brandschutzeinlage angeordnet sind. Dadurch entfällt der zusätzliche Arbeitsschritt des Kernbohrens in einer bereits fertig gegossenen Wand oder Decke, da das Hüllrohr des Brandschutzelements eine Durchführung für einen brennbaren Körper, beispielsweise eine Rohrleitung oder einen Kabelkanal, bereitstellt.

Um eine räumliche Trennung der Bewegungseinrichtung und der Brandschutzeinlage zu dem das Brandschutzelement durchsetzenden brennbaren Körper zu ermöglichen, kann das Hüllrohr zudem an zumindest einem axialen Ende einen Aufnahmeraum aufweisen, in dem die Bewegungseinrichtung und/oder die Brandschutzeinlage aufgenommen sind.

In einer bevorzugten Ausführungsform umfasst die Bewegungseinrichtung eine Feder, die die Bewegung der Brandschutzeinlage auslöst. Eine Feder stellt eine besonders kostengünstige Form der Bewegungseinrichtung dar.

In einer weiteren bevorzugten Ausführungsform kann die Bewegungseinrichtung ein Gewinde aufweisen, über welches die Position der Brandschutzeinlage gesteuert wird. Dadurch wird es möglich, dass nach dem Gießen der Wand oder Decke und dem Entfernen der Schalung das Brandschutzelement, beispielsweise per Hand oder Schraubenzieher, aus der Wand herausgedreht wird. Durch das Gewinde wird gleichzeitig eine sichere mechanische Verbindung zwischen der Bewegungseinrichtung und umgebenen Bauteilen mit einem Gegengewinde ermöglicht.

In noch einer weiteren Ausführungsform kann die Bewegungseinrichtung einen Motor umfassen, mit dem die Position der Brandschutzeinlage gesteuert wird. Auf diese Weise muss die Brandschutzeinlage nicht per Hand aus der Wand oder Decke herausbewegt werden.

Vorteilhaft ist es, wenn die Bewegungseinrichtung eine Haltevorrichtung umfasst, mit deren Hilfe die Brandschutzeinlage in ihrer Ausgangsposition innerhalb der Öffnung fixiert werden kann. Die Haltevorrichtung kann beispielsweise eine Rastverbindung umfassen. Auf diese Weise wird es möglich, dass die Brandschutzeinlage auch nach Entfernen der Schalung zunächst innerhalb der Wand oder Decke verbleibt, und erst nachdem die Haltevorrichtung gelöst wird, beispielsweise durch ein zur Seite drücken oder auch Abbrechen von Rastnasen, aus der Wand oder Decke in die Endposition herausbewegt wird, sodass die Brandschutzeinlage zumindest teilweise aus der Öffnung vorsteht.

Die Haltevorrichtung kann auch so ausgelegt werden, dass sie die Brandschutzeinlage in ihrer Endposition fixiert. Auf diese Weise kann verhindert werden, dass die Brandschutzeinlage versehentlich wieder in die Öffnung zurückbewegt wird. Als Haltevorrichtung können beispielsweise eine Rastverbindung und/oder Sperrklinken vorgesehen sein, um die Brandschutzeinlage in der Endposition zu sichern. Die Fixierung der Brandschutzeinlage in der Ausgangsposition und der Endposition kann durch unterschiedliche Bauteile mit unterschiedlicher Haltekraft bewirkt werden.

Die Brandschutzeinlage kann ein Brandschutzmaterial aufweisen, ausgewählt aus der Gruppe bestehend aus intumeszierenden Materialien, insbesondere Blähgraphit, Brandschutzbeschichtungen, Brandschutzschäumen, insbesondere auf Polyurethanbasis, und Ablationsbeschichtungen, insbesondere Aluminiumtrihydrat, und aus Kombinationen davon. Entsprechend kann das für eine bestimmte Anwendung am besten geeignete Brandschutzmaterial ausgewählt werden. Das Brandschutzelement kann daher für eine Vielzahl von Anwendungsfällen eingesetzt werden.

Ferner wird die Aufgabe erfindungsgemäß gelöst durch ein Verfahren zum Anbringen eines Brandschutzelements der zuvor beschriebenen Art in einer Wand oder Decke, mit den folgenden Schritten, wobei die Schritte d) und e) in beliebiger Reihenfolge ausgeführt werden können: a) Einbringen des Brandschutzelements in eine Schalung zum Gießen einer Wand oder Decke; b) Gießen der Wand oder Decke mit Beton; c) Entfernen der Schalung; d) Einbringen eines brennbaren Körpers durch eine Öffnung des Brandschutzelements; und e) Herausbewegen der Brandschutzeinlage des Brandschutzelements mittels der Bewegungseinrichtung aus der Wand oder Decke, so dass die Brandschutzeinlage zumindest teilweise aus der Wand oder Decke vorsteht und den brennbaren Körper umgreift.

Auf diese Weise wird das Brandschutzelement bereits vor dem Betonieren der Wand oder Decke an die gewünschte Position gebracht und liegt sofort nach dem Gießen der Wand oder Decke einsatzbereit vor.

Zugleich kann das Brandschutzelement eine Öffnung aufweisen, welche auf den später durch die Wand oder Decke hindurchzuführenden brennbaren Körper abgestimmt ist. Dadurch wird ein nachträgliches Kernbohren unnötig.

Gemäß einer bevorzugten Ausführungsform ist vorgesehen, dass die Brandschutzeinlage direkt bei Einbringen des brennbaren Körpers in die Öffnung ausgefahren wird, beispielsweise durch Lösen von Rastelementen, sodass kein zusätzlicher Arbeitsschritt zum Herausbewegen des Brandschutzelements aus der Wand oder Decke notwendig ist.

Beim Einsatz des erfindungsgemäßen Brandschutzelements in einer Wand wird dieses vorteilhafterweise auf beiden Seiten der Wand herausbewegt. Auf diese Weise kann ein Brandschutz gewährleistet werden, unabhängig davon auf welcher Seite der Wand ein Brandfall eintritt.

Bevorzugt schließt die Brandschutzeinlage nach dem Gießen der Wand oder Decke bündig mit dieser ab, und wird nach dem Gießen der Wand oder Decke in ihre Einsatzposition vor der Wand oder Decke bewegt. Somit kann gewährleistet werden, dass die Wand oder Decke sowohl liegend als auch stehend gegossen werden kann. Auf diese Weise ist es auch möglich, dass das Brandschutzelement in vorgefertigten Wänden eingebaut wird.

Weitere Vorteile und Eigenschaften der Erfindung ergeben sich aus der nachfolgenden Beschreibung bevorzugter Ausführungsformen und den Zeichnungen, auf die Bezug genommen wird. Diese sollen nicht in einem einschränkenden Sinn verstanden werden. In den Zeichnungen zeigen:
- Figur 1 ein erfindungsgemäßes Brandschutzelement innerhalb einer Wand mit einer Schalung,
- Figur 2 das Brandschutzelement aus Figur 1 innerhalb einer Wand,
- Figur 3 das Brandschutzelement aus Figur 2, nachdem es aus der Wand herausbewegt wurde, und
- Figur 4 eine alternative Ausführungsform des Brandschutzelements in einer Decke.

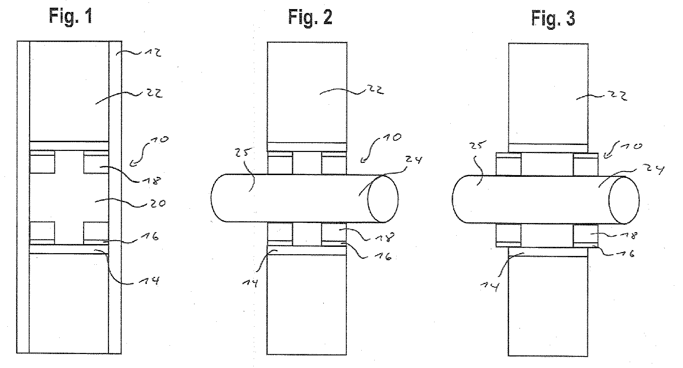

In Figur 1 ist ein erfindungsgemäßes Brandschutzelement 10 gezeigt, dass innerhalb einer Schalung 12 befestigt ist. Das Brandschutzelement 10 umfasst ein Hüllrohr 14, eine Bewegungseinrichtung 16 sowie eine Brandschutzeinlage 18. Zusätzlich weist das Brandschutzelement 10 im Hüllrohr 14 eine durchgehende Öffnung 20 auf. Die Brandschutzeinlage 18 ist in Längsrichtung der Öffnung 20 im Hüllrohr 14 beweglich angeordnet.

Die Bewegungseinrichtung 16 kann mit der Brandschutzeinlage 18 gekoppelt sein, so dass das die Brandschutzeinlage 18 aus einer Ausgangsposition, in der sich Brandschutzeinlage 18 innerhalb der Öffnung 20 befindet, zusammen mit der Bewegungseinrichtung 16 in eine Endposition bewegt werden kann, in der sich die Brandschutzeinlage 18 zumindest teilweise außerhalb der Öffnung 20 befindet.

In Figur 1 ist zugleich eine frisch aus Beton gegossene Wand 22 dargestellt, deren Größe und Form von der Schalung 12 vorgegeben wird. Durch das Hüllrohr 14 des Brandschutzelements 10 wird zugleich durch die Öffnung 20 des Brandschutzelements 10 eine Öffnung innerhalb der Wand geschaffen.

Die Wand 22 kann, wie in Figur 1 gezeigt, in einer stehenden Schalung 12 vertikal, grundsätzlich jedoch auch liegend in einer horizontal ausgerichteten Schalung 12 gegossen werden. Das Brandschutzelement 10 schließt bündig mit der Wand 22 ab.

In Figur 2 ist die in Figur 1 gezeigte Wand 22 dargestellt, in der das Brandschutzelement 10 eingegossen wurde. Zusätzlich wurde ein brennbarer Körper 24, in diesem Fall ein Rohr 25, durch die Öffnung 20 des Brandschutzelements 10 geführt. Dabei schließt das Brandschutzelement 10 nach wie vor bündig mit der Wand 22 ab.

In einem nächsten Schritt kann die Brandschutzeinlage 18 mittels der Bewegungseinrichtung 16 aus der Wand 22 herausbewegt werden, sodass zumindest ein Teil der Brandschutzeinlage 18 wie eine Manschette vor der Wand 22 liegt, wie in Figur 3 dargestellt, und den brennbaren Körper 24 umgreift.

Dabei kann die Bewegungseinrichtung 16 beispielsweise ein Gewinde aufweisen, welches in ein passendes Gegengewinde, beispielsweise auf dem Hüllrohr 14, eingreift und es somit ermöglicht, die Bewegungseinrichtung 16 aus der Wand 22 heraus zu drehen, beispielsweise per Hand oder mittels eines geeigneten Schraubwerkzeugs. Anstelle der Gewinde können auch eine oder mehrere Führungsnuten vorgesehen sein, in die korrespondierende Führungsstifte oder Rippen eingreifen. Dadurch wird zusammen mit der Bewegungseinrichtung 16 auch die Brandschutzeinlage 18 zumindest teilweise vor die Wand 22 bewegt.

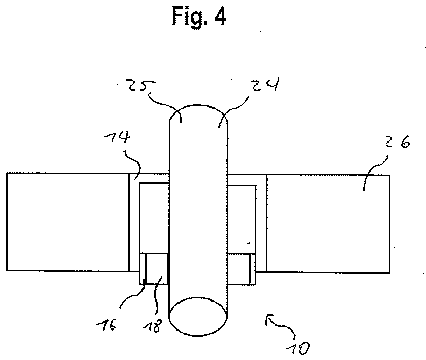

In Figur4 ist eine alternative Ausführungsform dargestellt, in der ein Brandschutzelement 10 in einer Decke 26 eingegossen wurde. In dieser Ausführungsform ist lediglich auf der nach unten weisenden Seite der Decke 26 eine Brandschutzeinlage 18 und eine Bewegungseinrichtung 16 vorgesehen. Auf der Oberseite der Decke 26 schließt das Hüllrohr 14 bündig mit der Decke 26 ab. Die Öffnung 20 des Brandschutzelements 10 wird daher auf der Unterseite der Decke 26 durch die Brandschutzeinlage 18 und auf der Oberseite der Decke 26 durch das Hüllrohr 14 vorgegeben.

In den gezeigten Ausführungsformen ist die Brandschutzeinlage 18 direkt mit der Bewegungseinrichtung 16 verbunden. Gemäß einer weiteren Ausführungsform kann vorgesehen sein, dass an einem oder beiden axialen Enden des Brandschutzelements 10 ein Aufnahmeraum (nicht gezeigt) vorgesehen ist, in welchem die Bewegungseinrichtung 16 und/oder die Brandschutzeinlage 18 aufgenommen sind. Auf diese Weise können die Bewegungseinrichtung 16 und die Brandschutzeinlage 18 getrennt voneinander vorliegen. Beispielsweise kann die Bewegungseinrichtung 16 ein Federelement umfassen, das auf die Brandschutzeinlage 18 einwirkt und diese in die Endposition vor der Wand oder Decke bewegt, sobald eine von der Schalung 12 oder einer Haltevorrichtung ausgeübte Gegenkraft wegfällt.

Die dargestellte Brandschutzeinlage 18 kann als Brandschutzmaterial 28 beispielsweise Blähgraphit oder ein anderes intumeszierendes Material umfassen. In diesem Fall verschließt das sich aufblähende intumeszierende Material im Brandfall die Öffnung 20, sobald der brennbare Körper 24, hier das Rohr 25, schmilzt.

## Patentansprüche

1. Brandschutzelement zum Abdichten eines eine Öffnung in einer Wand (22) oder Decke (26) durchsetzenden brennbaren Körpers (24) im Brandfall, mit einer Brandschutzeinlage (18) und einer auf die Brandschutzeinlage (18) wirkenden Bewegungseinrichtung (16), wobei die Brandschutzeinlage (18) in Längsrichtung der Öffnung (20) beweglich angeordnet ist.

2. Brandschutzelement nach Anspruch 1, **dadurch gekennzeichnet, dass** sich die Brandschutzeinlage (18) in einer Ausgangsposition innerhalb der Öffnung (20) befindet und mittels der Bewegungseinrichtung (16) in eine Endposition bewegt werden kann, in der sich die Brandschutzeinlage (18) zumindest teilweise außerhalb der Öffnung (20) befindet.

3. Brandschutzelement nach Anspruch 1 oder 2, **dadurch gekennzeichnet, dass** die Brandschutzeinlage (18) mit der Bewegungseinrichtung (16) gekoppelt ist.

4. Brandschutzelement nach einem der vorhergehenden Ansprüche, **dadurch gekennzeichnet, dass** das Brandschutzelement (10) ein Hüllrohr (14) umfasst, in dem die Bewegungseinrichtung (16) und/oder die Brandschutzeinlage (18) angeordnet sind.

5. Brandschutzelement nach Anspruch 4, **dadurch gekennzeichnet, dass** das Hüllrohr (14) an zumindest einem axialen Ende einen Aufnahmeraum umfasst, in dem die Bewegungseinrichtung (16) und/oder die Brandschutzeinlage (18) angeordnet sind.

6. Brandschutzelement nach einem der vorhergehenden Ansprüche, **dadurch gekennzeichnet, dass** die Bewegungseinrichtung (16) eine Feder umfasst, die die Bewegung der Brandschutzeinlage (18) bewirkt.

7. Brandschutzelement nach einem der vorhergehenden Ansprüche, **dadurch gekennzeichnet, dass** die Bewegungseinrichtung (16) ein Gewinde umfasst, über welches die Position der Brandschutzeinlage (18) gesteuert wird.

8. Brandschutzelement nach einem der vorhergehenden Ansprüche, **dadurch gekennzeichnet, dass** die Bewegungseinrichtung (16) einen Motor umfasst, mit dem die Bewegung der Bewegungseinrichtung (16) gesteuert wird.

9. Brandschutzelement nach einem der vorhergehenden Ansprüche, **dadurch gekennzeichnet, dass** die Bewegungseinrichtung (16) mindestens eine Haltevorrichtung, bevorzugt eine Rastverbindung und/oder eine Sperrklinke, umfasst, welche die Brandschutzeinlage (18) in ihrer Position fixiert.

10. Brandschutzelement nach einem der vorhergehenden Ansprüche, **dadurch gekennzeichnet, dass** die Brandschutzeinlage (18) ein Brandschutzmaterial (28) aufweist, ausgewählt aus der Gruppe bestehend aus intumeszierenden Materialien, insbesondere Blähgraphit, Brandschutzbeschichtungen, Brandschutzschäumen, insbesondere auf Basis von Polyurethan-Schaum, und Ablationsbeschichtungen, insbesondere Aluminiumtrihydrat, und aus Kombinationen davon.

11. Verfahren zum Anbringen eines Brandschutzelements (10) gemäß einem der vorhergehenden Ansprüche in eine Wand (22) oder Decke (26), mit den folgenden Schritten, wobei die Schritte d) und e) in beliebiger Reihenfolge durchgeführt werden können:
a) Einbringen des Brandschutzelements (10) in eine Schalung (12) zum Gießen einer Wand (22) oder Decke (26);
b) Gießen der Wand (22) oder Decke (26) mit Beton;
c) Entfernen der Schalung (12);
d) Einbringen eines brennbaren Körpers (24) durch die Öffnung (20) des Brandschutzelements; und
e) Herausbewegen der Brandschutzeinlage (18) des Brandschutzelements (10) mittels der Bewegungseinrichtung (16) aus der Wand (22) oder Decke (26), so dass die Brandschutzeinlage (18) sich zumindest teilweise außerhalb der Öffnung (20) befindet.

12. Verfahren nach Anspruch 11, **dadurch gekennzeichnet, dass** die Brandschutzeinlage (18) auf beiden Seiten der Wand (22) oder Decke (26) aus der Öffnung (20) herausbewegt wird.

13. Verfahren nach Anspruch 11 oder 12, **dadurch gekennzeichnet, dass** sich die Brandschutzeinlage nach dem Gießen der Wand (22) oder Decke (26) innerhalb der Öffnung (20) befindet und (26) bündig mit der Wand (22) oder Decke (26) abschließt.
